# EUROPÄISCHE PATENTSCHRIFT

(11) **EP 0 921 875 B1**
(45) Veröffentlichungstag und Bekanntmachung des Hinweises auf die Patenterteilung: **14.11.2001**
(21) Anmeldenummer: 97937558.1
(22) Anmeldetag: 06.08.1997
(51) Int. Cl.: B21D 39/04, F16L 41/08, F16L 41/04

(54) **VORRICHTUNG UND VERFAHREN ZUM VERBINDEN EINES ERSTEN ROHRES MIT EINEM ROHRFÖRMIGEN ELEMENT**
METHOD AND DEVICE FOR CONNECTING A FIRST TUBE TO A TUBULAR ELEMENT
PROCEDE ET DISPOSITIF POUR RELIER UN PREMIER TUYAU A UN ELEMENT TUBULAIRE

(30) Priorität: 09.08.1996 DE 29613808 U; 01.11.1996 DE 29618262 U
(43) Veröffentlichungstag der Anmeldung: 16.06.1999
(73) Patentinhaber: Vieregge, Uwe, 63584 Gründau (DE)
(72) Erfinder: Vieregge, Uwe, 63584 Gründau (DE)
(74) Vertreter: Stoffregen, Hans-Herbert, Dr. Dipl.-Phys.
(86) Internationale Anmeldenummer: EP9704293
(87) Internationale Veröffentlichungsnummer: WO9806518

(56) Entgegenhaltungen:
- DE-U- 9 411 013
- DE-U- 9 416 506
- FR-A- 2 210 270
- FR-A- 2 229 010
- US-A- 1 415 043
- US-A- 1 889 874
- US-A- 2 015 246
- US-A- 2 495 615
- US-A- 2 835 513
- US-A- 5 207 461

## Beschreibung

Die Erfindung bezieht sich auf eine Vorrichtung zum Verbinden eines ersten Rohres mit einem rohrförmigen Element wie Verbindungsrohr oder Abschnitt eines solchen, wobei das rohrförmige Element mit seinem Endabschnitt eine Öffnung des ersten Rohres durchsetzt und mittels der Vorrichtung kraftschlüssig mit diesem verunden wird Ferner bezieht sich die Erfindung auf ein Verfahren zum Verbinden eines ersten Rohres mit einem rohrförmigen Element

Nach dem DE 94 16 506 U1 umfasst eine entsprechende Verbindung ein Verbindungselement mit selbstschneidendem Gewinde, das in die Öffnung des ersten Rohres einschraubbar und von einem hohlzylindrischen Gehäuse umgeben ist, welches sowohl gegenüber dem Verbindungselement als auch gegenüber dem Rohr abdichtet. Das Verbindungselement erstreckt sich in einem Abschnitt innnerhalb des ersten Rohres, so dass dessen freier Querschnitt in diesem Bereich reduziert wird. Außerdem sind mehrere Elemente erforderlich, um die gewünschte flüssigkeits- und druckdichte Verbindung herzustellen.

Auch ist es bekannt, eine Verbindung mittels einer Sprinklerschelle herzustellen, wie diese der DE 94 11 013 U1 zu entnehmen ist.

Nach dem DE 94 11 979 U1 wird eine Rohrabzweigung durch Ausbilden einer planen Fläche einer Wand eines ersten Rohres realisiert, von der ein zweites Rohr ausgeht.

Eine Verbindung zwischen einem Rohr und einem Anschluss kann nach der US 2,015,246 mittels Schweißen erfolgen.

Aus der US 2,835,513 ist eine Verbindung zwischen einem ersten und einem zweiten Rohr bekannt, die für Zäune, Spielplatzgeräte, Leitern oder Gerüste bestimmt ist. Dabei ragt eines der Rohre vollständig innerhalb des anderen Rohres hinein und wird durch ein in der Verbindung verbleibendes Werkzeug derart verformt, dass eine bleibende Verbindung durch Ausbildung von Rippen des Rohres zur Verfügung steht.

Aus der US 5,207,461 ist eine Vorrichtung der eingangs genannten Art zu entnehmen, die eine Kolbenzylinderanordnung sowie ein das erste Rohr aufnehmendes Gestell mit Lagerung umfasst. Von dem Kolben geht eine Kolbenstange aus, mit der lösbar ein Stab verbunden ist, der endseitig einen kalottenförmigen Abschnitt aufweist, dessen maximaler Durchmesser kleiner als der der Öffnung des ersten Rohres ist. Das Rohrverbindungsstück selbst, welches mit dem ersten Rohr zu verbinden ist, weist einen fischmaulförmigen Endabschnitt mit umgebördeltem Rand auf, der in eine zu einer Materialschwächung führenden Nut übergeht, die ihrerseits von einer Außenschulter des Rohrverbindungsstückes begrenzt ist, dessen Außendurchmesser größer als der der Öffnung ist. Zum kraftschlüssigen Verbinden des Rohrverbindungsstückes mit dem ersten Rohr wird der Stab mit dem kalottenförmigen Kopf von dem fischmaulseitigen Ende her in das Rohrverbindungsstück eingebracht, um sodann mit der Kolbenstange verbunden zu werden. Sodann wird das Rohrverbindungsstück auf die Öffnung des ersten Rohres aufgesetzt. Auf die Länge des Rohrverbindungsstücks abgestellt werden Arme des Gestells auf dessen äußerem Rand abgestützt, um sodann mittels der Kolbenzylinderanordnung den Stab mit dem kalottenförmigen Kopf in Richtung des Rohrverbindungsstückes zu ziehen, wodurch der sich innerhalb des ersten Rohres ersteckende umgebördelte Rand in Richtung des ersten Rohres umgebogen wird, um die gewünschte kraftschlüssige Verbindung herzustellen. Nach hinreichender Verformung kann der kalottenförmige Kopf mit dem Stab aus dem Rohrverbindungsstück herausgezogen werden. Zur Abdichtung zwischen dem Rohrverbindungsstück und dem ersten Rohr verläuft zwischen der Schulter und der Außenfläche des ersten Rohres eine Flachdichtung.

Der vorliegenden Erfindung liegt zum einen das Problem zu Grunde, eine Vorrichtung und ein Verfahren der eingangs genannten Art so weiterzubilden, dass mit einfachen 3Iaßndunen und unabhängig von einer Kolbenzylinderanordnung eine sichere Verbindung zwischen einem ersten Rohr und einem rohrförmigen Element wie zweiten Rohr oder sonstigen rohrförmigen Anschlusselement wie Sprinklerkopf erfolgen kann, wobei sichergestellt sein soll, dass die Abzweigung flüssigkeits- und druckdicht ist.

Vorrichtungsgemäß wird das Problem dadurch gelöst, dass die Vorrichtung zumindest zwei axial zueinander verschiebbare sich innerhalb des rohrförmigen Elementes bis in die Öffnung hinein erstreckende Abschnitte umfasst, dass einer der Abschnitte einen radial abragenden Vorsprung aufweist, der bei sich innerhalb des rohrförmigen Elementes angeordneten Abschnitten den Endabschnitt des rohrförmigen Elementes hintergreift, wobei die Abschnitte außerhalb des abragenden Vorsprunges einen wirksamen Gesamtquerschnitt aufweisen, der auf den Innenquerschnitt des rohrförmigen Elementes ausgelegt ist.

Dabei ist der den abragenden Vorsprung aufweisende Abschnitt axial zu zumindest einem weiteren Abschnitt derart verschiebbar, dass der sich innerhalb des ersten Rohres erstreckende Endabschnitt des rohrförmigen Elementes in Richtung Innenwandung des ersten Rohres umbiegbar ist.

Aufgrund der erfindungsgemäßen Vorrichtung ist mit einfachen Maßnahmen eine kraftschlüssige Verbindung des rohrförmigen Elementes mit der Öffnung des ersten Rohres möglich. Hierzu ist es nur erforderlich, dass der einen radial abragenden Vorsprung aufweisende Abschnitt des Werkzeuges zunächst von außen durch das rohrförmige Element bis in das Innere des ersten Rohres verschoben wird, um sodann den oder die weiteren Abschnitte axial in den Bereich der Öffnung zu verschieben, wobei der wirksame Gesamtquerschnitt der innerhalb der Öffnung verlaufenden Abschnitte in etwa gleich dem Innendurchmesser des rohrförmigen Elementes entspricht. Hierdurch ist sichergestellt, dass dann, wenn mittels des abragenden Vorsprungs des ersten Abschnitts der sich innerhalb des ersten Rohres erstreckende Randabschnitt des rohrförmigen Elementes in Richtung der Innenwand des ersten Rohres umgebogen wird, ein seitliches Ausweichen des Abschnitts nicht erfolgen kann, so dass allein axiale Kräfte auf den das Umbiegen bzw. Umbördeln bewirkenden Abschnitt einwirken müssen.

Gleichzeitig ist sichergestellt, dass das rohrförmige Element nicht unkontrollierten Kräften ausgesetzt wird, die zu einer unzulässigen Verformung führen können.

Insbesondere sieht die Erfindung vor, dass das Werkzeug zwei axial sich innerhalb der Öffnung des ersten Rohres erstreckende und innerhalb der Öffnung drehbare Abschnitte umfasst, dass der den abragenden Vorsprung aufweisende erste Abschnitt einen zylinderförmigen Grundkörper und der zweite Abschnitt im Querschnitt eine Sichelform aufweisen, deren konkave Fläche im Berührungsbereich mit dem ersten Abschnitt an dessen Außengeometrie angepasst ist.

Mit anderen Worten weisen die axial zueinander verschiebbaren ersten und zweiten Abschnitte einen Gesamtquerschnitt auf, der in etwa einer Kreisform entspricht, wodurch eine gute Anpassung an den Innenquerschnitt des mit dem ersten Rohr zu verbindenden rohrförmigen Elementes möglich ist.

Der abragende Vorsprung selbst weist vorzugsweise eine Zylinderform mit in Richtung des Grundkörpers schräg verlaufender Unterseite auf, wobei der Neigungswinkel derart ausgelegt ist. dass ein flächiges Anliegen des umzubiegenden Endabschnitts des rohrförmigen Elementes an der Innenwandung des ersten Rohres ermöglicht wird.

Ferner sollte der Vorsprung bündig von dem Außenflächenbereich ausgehen, der entlang dem zweiten Abschnitt verschiebbar ist.

Das Umbiegen bzw. -bördeln des sich innerhalb des ersten Rohres erstreckenden Endabschnittes erfolgt peripher dadurch, dass das Werkzeug sukzessiv um seine Längsachse drehbar ist.

Verfahrensmäßig wird das Problem zum kraftschlüssigen Verbinden des rohrförmigen Elementes mit der Öffnung des ersten Rohres dadurch gelöst, dass das rohrförmige Element mit seinem Endabschnitt in die Öffnung des ersten Rohres eingebracht wird, dass durch das rohrförmige Element ein erster Abschnitt des Werkzeuges mit einem radial abragenden Vorsprung in das Innere des ersten Rohres derart eingebracht wird, dass der Vorsprung zwischen äußerem freien Rand des rohrförmigen Elementes und gegenüber der Öffnung verlaufender Innenwandung des ersten Rohres verläuft, dass axial entlang des ersten Abschnitts ein zweiter Abschnitt bis in den Öffnungsbereich des ersten Rohres verschoben wird, wobei der erste und der zweite Abschnitt im Bereich der Öffnung einen wirksamen Gesamtquerschnitt aufweisen, der dem Innenquerschnitt des rohrförmigen Elementes angepasst ist, dass der erste Abschnitt in Richtung der Öffnung entlang des zweiten Abschnitts bei gleichzeitigem bereichsweisen Umbiegen des innerhalb des ersten Rohres verlaufenden Randabschnitts des rohrförmigen Elementes verschoben wird, dass der erste Abschnitt anschließend in Richtung des Rohrinneren verschoben und um seine Längsachse gedreht wird, um anschließend in zuvor beschriebener Weise weitere Bereiche des Endabschnittes des rohrförmigen Elementes umzubiegen und somit kraftschlüssig mit dem Rand der Öffnung des ersten Rohres zu verbinden.

Nachdem der Endabschnitt des rohrförmigen Elementes im erforderlichen Umfang umgebogen bzw. -gebördelt ist, wird zunächst der zweite Abschnitt und sodann der erste Abschnitt aus dem rohrförmigen Element entfernt.

Die druck- und flüssigkeitsdichte Verbindung zwischen dem rohrförmigen Element und dem ersten Rohr erfolgt dadurch, dass das rohrförmige Element rohraußenseitig eine vorzugsweise umlaufende Aufnahme für ein Dichtelement wie O-Ring aufweist.

Weitere Einzelheiten, Vorteile und Merkmale der Erfindung ergeben sich nicht nur aus den Ansprüchen, den diesen zu entnehmenden Merkmalen - für sich und/oder in Kombination -, sondern auch aus der nachfolgenden Beschreibung von der Zeichnung zu entnehmenden bevorzugten Ausführungsbeispielen.

Es zeigen:

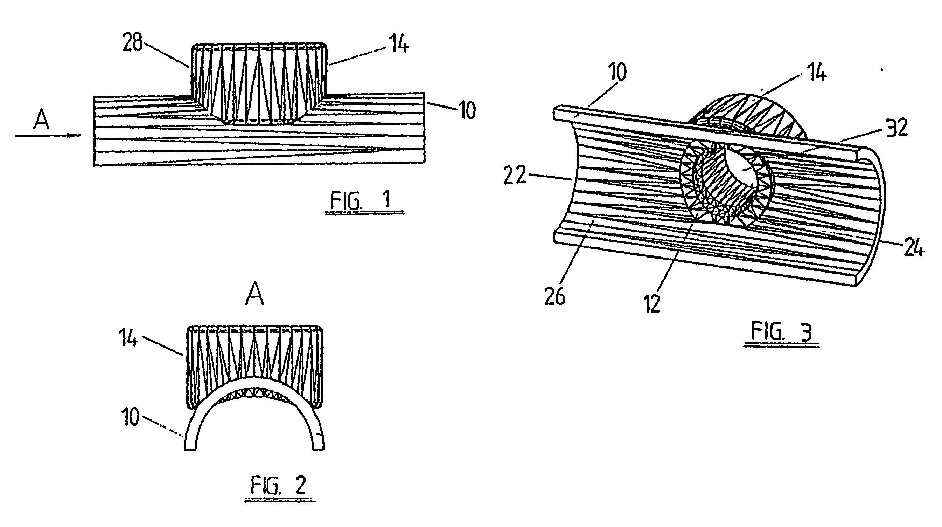

- Fig. 1: eine Seitenansicht eines teilweise dargestellten Rohres mit einem mit diesem verbundenen rohrförmigen Element,
- Fig. 2: das Rohr mit dem rohrförmigen Element dargestellt in Richtung A der Fig. 1,
- Fig. 3: das Rohr und das rohrförmige Element gemäß Fig. 1 und Fig. 2 in Unteransicht,

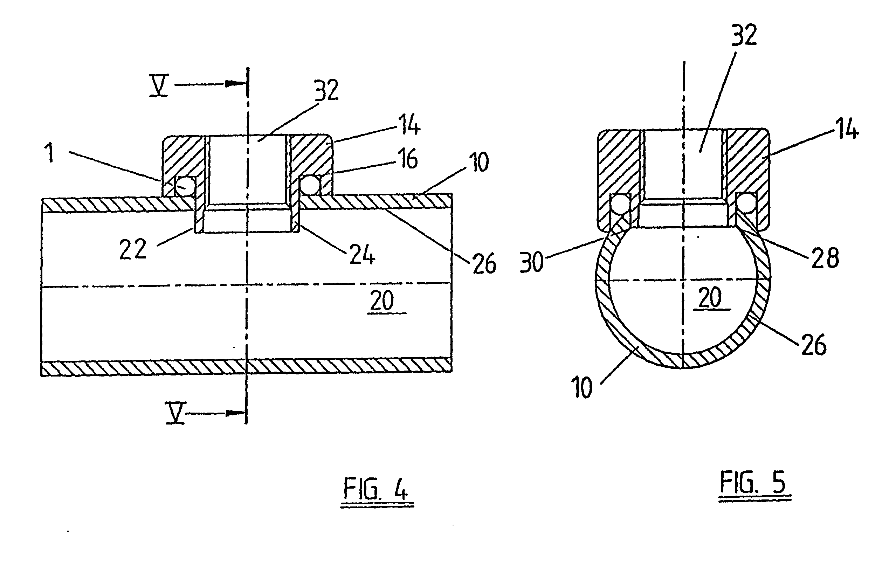

- Fig. 4: einen Längsschnitt durch ein Rohr mit einem rohrförmigen Element vor dessen kraftschlüssiger Verbindung mit dem Rohr,
- Fig. 5: einen Schnitt entlang der Linie V-V in Fig. 4,
- Fig. 6: eine perspektivische Darstellung eines Werkzeuges zum kraftschlüssigen Verbinden eines ersten Rohres mit einem rohrförmigen Element,
- Fig. 7: eine weitere perspektivische Darstellung des Werkzeuges nach Fig. 6 und
- Fig. 8 bis 10: verschiedene Stellungen des Werkzeuges nach den Fig. 6 und 7 zum kraftschlüssigen Verbinden des rohrförmigen Elementes mit dem Rohr,

Um ein erstes Rohr 10 mit einem Anschlusselement wie Sprinklerkopf, Ventil, Messelement oder weiterem Rohr zu verbinden, ist in dem Rohr 10 eine Öffnung 12 vorgesehen, in die ein rohrförmiges Element 14, das als hohlzylinderisches Verbindungselement bezeichnet werden kann, einsetzbar ist und das über eine in einer zumindest bereichsweise nutartig ausgebildeten außenseitig entlang des Rohres 10 verlaufenden Aufnahme 16 eingelassene Dichtung 18 in Form eines O-Rings gegenüber dem Rohr 10 abgedichtet ist.

Um eine druckdichte und flüssigkeitsdichte Verbindung zwischen dem Verbindungselement 14 und dem Rohr 10 sicherzustellen, erfolgt eine kraftschlüssige Verbindung dadurch, dass sich in das Innere 20 des Rohres 10 ein Randabschnitt oder Abschnitte 22, 24 des Verbindungselementes 14 erstrecken, die im Ausführungsbeispiel in axialer Richtung des Rohres 10 umgebördelt werden. Hierdurch gelangen die inneren Abschnitte 22, 24 an der Innenwandung 26 des Rohres 10 zum Anliegen, wodurch der außerhalb des Rohres 10 verlaufende Abschnitt 28 in Richtung des Rohres 10 gezogen wird, um die erforderliche kraftschlüssige Verbindung und die notwendige Abdichtung über den O-Ring 18 sicherzustellen.

In radialer Richtung des Rohres 10 betrachtet ist es nicht erforderlich, dass sich das Verbindungselement 14 in den Innenraum erstreckt. Vielmehr kann der diesbezügliche Innenrandbereich 28, 30 bündig oder nahezu bündig in die Innenwandung 26 des Rohres übergehen. Selbstverständlich kann jedoch auch ein umlaufender Randbereich des Verbindungselementes 14 umgebördelt bzw. -gebogen werden.

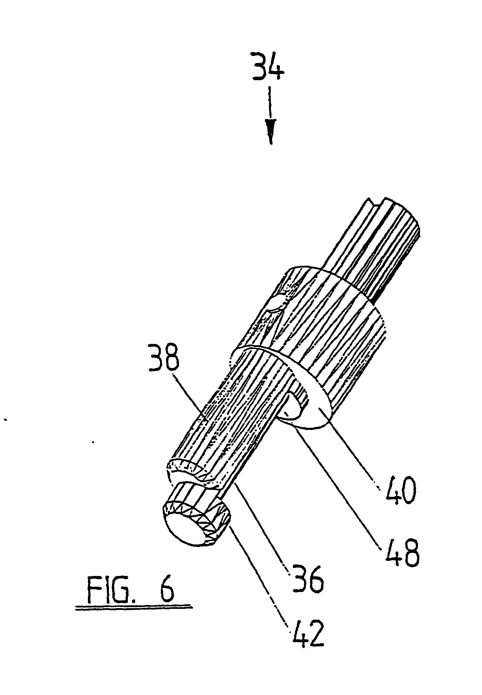

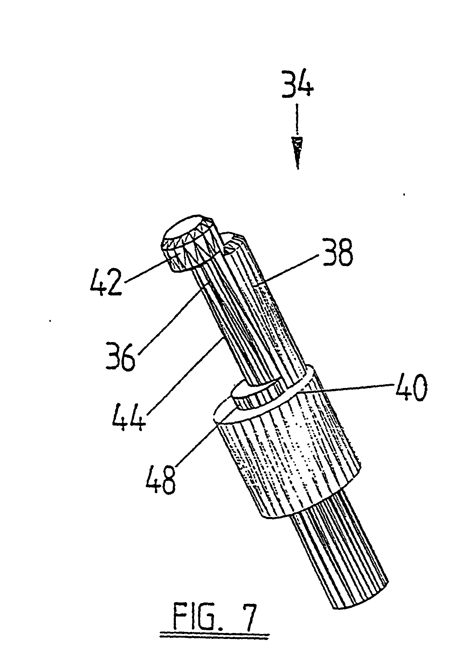

Um das Verbindungselement 14 über die Abschnitte 22, 24 kraftschlüssig mit dem Rohr 10 durch Umbiegen bzw. Umbördeln der Abschnitte 22, 24 zu verbinden, wird über das Verbindungselement 14, also dessen zum Innenraum 20 des Rohres 10 führende Öffnung 32 ein ein- oder mehrteiliges Werkzeug eingeführt, um sodann die Abschnitte 22, 24 umzudrücken, zu verpressen oder in anderer geeigneter Weise derart umzubiegen, dass diese an der Innenwandung 26 des Rohres 10 zum Anliegen kommen. Ein entsprechendes Werkzeug und dessen Funktionsweise ist den Fig. 6 bis 10 zu entnehmen.

Das rein prinzipiell dargestellte Werkzeug 34 umfasst zwei axial zueinander verschiebbare Abschnitte 36. 38 von denen der Abschnitt 36 geführt von einer zeichnerisch zylindrisch dargestellten Aufnahme 40 aufgenommen ist, die integral mit dem Abschnitt 38 ausgebildet ist.

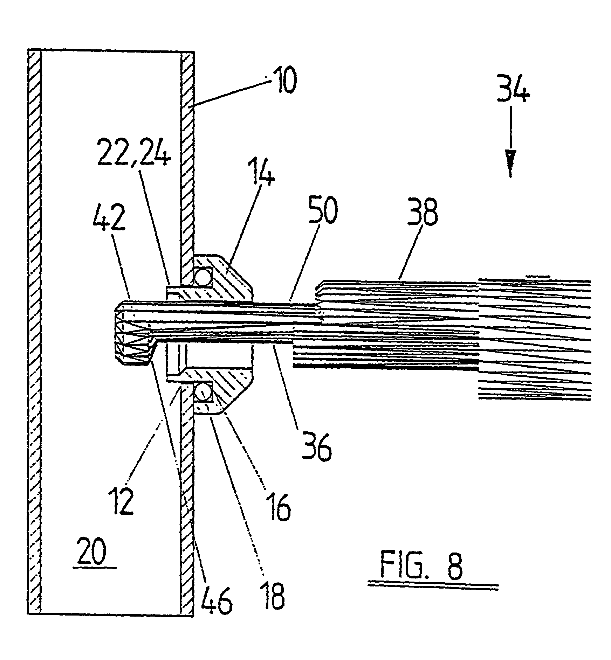

Der erste Abschnitt 36 weist endseitig einen radial abragenden zylindrischen Vorsprung 42 auf, der unterseitig in Richtung eines Basisabschnittes 44 des Abschnitts 36 schräg verläuft, also eine in Richtung der Aufnahme 40 bereichsweise kegelstumpfförmige Geometrie besitzt. Die entsprechende Geometrie der Unterseite 46 ergibt sich insbesondere aus den Fig. 8, 9 und 10.

Der Basisabschnitt 44 geht in einen einen größeren Durchmesser aufweisenden zylindrischen Abschnitt 48 über, der innerhalb der Aufnahme 40 verschiebbar ist. Der erste Abschnitt 36 hat folglich eine Geometrie, die einer Welle mit abragenden Nocken entspricht.

Der zweite Abschnitt 38 ist entlang der Außenseite des ersten Abschnitts 36 in einem Bereich 50 verschiebbar, der abgewandt zu dem radial abragenden Vorsprung 42 verläuft. Da der erste Abschnitt 36 in den Bereich 50 der Umfangsfläche eines Zylinders folgt, weist demzufolge der zweite Abschnitt 38 eine im Schnitt sichelförmige Geometrie auf, dessen konkave Innenfläche an die Außenfläche des Abschnitts 36 angepasst ist.

Das axiale Verschieben der Abschnitte 36, 38 kann mit geeigneten Mitteln erfolgen, ohne dass näher darauf einzugehen ist.

Um mit Hilfe des Werkzeuges 34 den innerhalb des ersten Rohres 10 hineinragenden Randabschnitt 22, 24 des rohrförmigen Elementes 16 umzubiegen bzw. zu -bördeln, um im gewünschten Umfang eine kraftschlüssige Verbindung zu erhalten, wird verfahrensmäßig wie folgt vorgegangen:

Zunächst wird das Element 14 in die Öffnung 12 des Rohres 10 eingesetzt, so dass ersteres mit dem äußeren Randbereich 22, 24 im Inneren 20 des Rohres 10 verläuft.

Der umlaufende Absatz 16 des Elementes 14 liegt sodann auf der Außenwandung des Rohres 10 auf. Sodann wird das Werkzeug 34 auf die Öffnung 12 ausgerichtet und der den radial abragenden Vorsprung 42 aufweisende erste Abschnitt 36 wird durch das Element 14 und die Öffnung 12 in das Innere 20 des Rohres 10 hineingeschoben, und zwar in einem Umfang, dass der Vorsprung 42 mit seiner Unterseite 46 zwischen dem Randbereich 22, 24 und gegenüberliegender Wandung des Rohres 10 verläuft. Dieser Verfahrensschritt ist in Fig. 8 dargestellt.

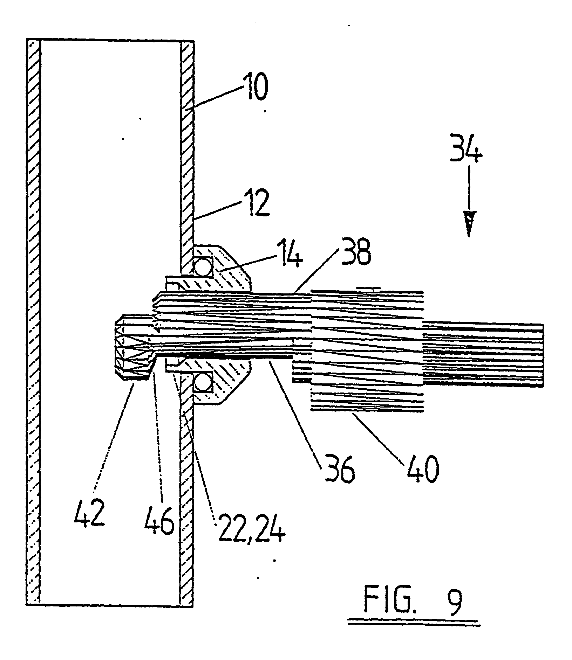

Sodann wird der dem ersten Abschnitt 36 zugeordnete Abschnitt 38 axial entlang des Außenwandbereichs 50 des ersten Abschnitts 36 verschoben, wobei gleichzeitig ein axiales Verschieben des Werkzeugs 34 in einem Umfang erfolgt, dass sich innerhalb des rohrförmigen Elementes 14 und der Öffnung 12 des Rohres 10 sowohl der erste als auch der zweite Abschnitt 36, 38 des Werkzeugs 34 erstreckt (Fig. 9).

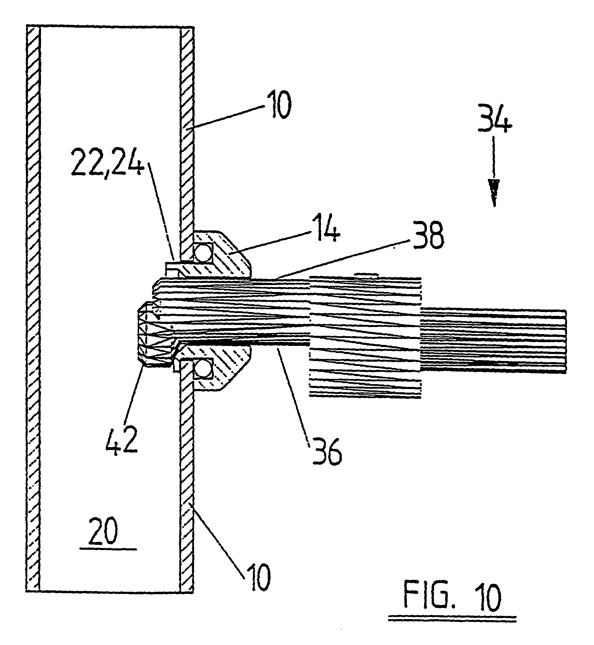

Der wirksame Außendurchmesser der sich innerhalb der Öffnung 12 in dem rohrförmigen Element 12 erstreckenden ersten und zweiten Abschnitte 36, 38 ist dabei an den Innendurchmesser des rohrförmigen Elementes 14 innerhalb der Öffnung 12 angepasst, um eine radiale Relativbewegung weitgehend ausschließen zu können. Sodann wird der erste den radial abragenden Vorsprung 42 aufweisende Abschnitt 36 in Richtung der Öffnung 12 relativ zu dem zweiten Abschnitt 38 zurückgezogen, wodurch der Rand bzw. die Abschnitte 22, 24 des rohrförmigen Abschnitts 14 entlang der abschnittsweise einer Kegelstumpfgeometrie folgenden Unterseite 46 des Vorsprungs 42 entlangleiten und umgebogen werden, um an der Innenwandung des Rohres 10 zum Anliegen zu kommen (Fig. 10). Sodann wird der erste Abschnitt 36 wieder in das Innere 20 des Rohres 10 verschoben, das Werkzeug 34 gedreht, um einen anderen Abschnitt des sich innerhalb des Rohres 10 erstreckenden Randbereichs 22, 24 in zuvor beschriebener Weise umzubiegen.

Nachdem das rohrförmige Element 14 im erforderlichen Umfang durch Umbiegen der sich innerhalb des Rohres 10 erstreckenden Abschnitte kraftschlüssig mit diesem verbunden ist. wird der zweite Abschnitt 38 aus dem rohrförmigen Element 36 zurückgezogen. um sodann nach radialem Verstellen des Werkzeuges 34 den ersten Abschnitt 36 mit dem radial abragenden Kopf 42 herauszuziehen.

## Patentansprüche

1. Vorrichtung (34) zum Verbinden eines ersten Rohres (10) mit einem rohrförmigen Element (14) wie Verbindungsrohr oder Abschnitt eines solchen, wobei das rohrförmige Element mit seinem Endabschnitt (22, 24) eine Öffnung (12) des ersten Rohres durchsetzt und mittels der Vorrichtung kraftschlüssig mit diesem verbunden wird,
**dadurch gekennzeichnet,**
**dass** die Vorrichtung (34) zumindest zwei axial relativ zueinander verschiebbare, sich innerhalb des rohrförmigen Elementes (14) bis oder nahezu bis in das erste Rohr (10) hinein erstreckende Abschnitte (36, 38) umfaßt, dass einer der Abschnitte (36) einen radial abragenden Vorsprung (42) aufweist, der bei sich innerhalb des Rohres (10) angeordneten Abschnitten den Endabschnitt (22, 24) hintergreift, wobei die Abschnitte außerhalb des abragenden Vorsprungs einen wirksamen Gesamtquerschnitt aufweisen, der dem Innenquerschnitt des rohrförmigen Elementes (14) im Bereich der Öffnung (12) des ersten Rohres (10) angepasst ist.

2. Vorrichtung nach Anspruch 1,
**dadurch gekennzeichnet,**
**dass** der den abragenden Vorsprung (42) aufweisende Abschnitt (36) axial zu zumindest einem weiteren Abschnitt (38) derart verschiebbar ist, dass der sich innerhalb des ersten Rohres (10) erstreckende Endabschnitt (22, 24) des rohrförmigen Elementes (14) in Richtung Innenwandung des ersten Rohres umbiegbar ist.

3. Vorrichtung nach Anspruch 1 oder 2,
**dadurch gekennzeichnet,**
**dass** das Werkzeug (34) zwei axial sich innerhalb der Öffnung (12) des ersten Rohres (10) relativ zueinander verschiebbare und in der Öffnung anordbare Abschnitte (36, 38) umfasst, dass der den abragenden Vorsprung (42) aufweisende erste Abschnitt (36) einen zylinderförmigen Grundkörperabschnitt (44) und der zweite Abschnitt im Querschnitt eine Sichelform aufweist, deren konkav verlaufende Fläche im Berührungsbereich mit dem ersten Abschnitt an dessen Außengeometrie angepasst ist.

4. Vorrichtung nach zumindest einem der vorhergehenden Ansprüche,
**dadurch gekennzeichnet,**
**dass** der abragende Vorsprung (42) eine Zylinderform mit in Richtung des Grundkörperabschnitts (44) des ersten Abschnitts (36) schräg verlaufender Unterseite (46) aufweist.

5. Vorrichtung nach zumindest einem der vorhergehenden Ansprüche,
**dadurch gekennzeichnet,**
**dass** die Unterseite (46) des radial abragenden Vorsprungs (42) des ersten Abschnitts (36) abschnittsweise einer Außenfläche eines Kegelstumpfes folgt.

6. Vorrichtung nach zumindest einem der vorhergehenden Ansprüche,
**dadurch gekennzeichnet,**
**dass** der radial abragende Vorsprung (42) außenwandseitig bündig in den Grundkörperabschnitt (44) im Berührungsbereich mit dem zweiten Abschnitt (38) übergeht.

7. Vorrichtung nach zumindest einem der vorhergehenden Ansprüche,
**dadurch gekennzeichnet,**
**dass** das Werkzeug (34) um seine Längsachse drehbar ist.

8. Vorrichtung nach zumindest einem der vorhergehenden Ansprüche,
**dadurch gekennzeichnet,**
**dass** der erste Abschnitt (36) eine Welle mit abragendem Nocken als der radial abragende Vorsprung (42) ist, und dass der erste Abschnitt eine zylindrische Aufnahme (40) durchsetzt, von der der zweite Abschnitt (38) ausgeht.

9. Vorrichtung nach zumindest einem der vorhergehenden Ansprüche,
**dadurch gekennzeichnet,**
**dass** die Aufnahme (40) und der zweite Abschnitt (38) eine Einheit bilden.

10. , Verfahren zum Verbinden eines ersten Rohres mit einem rohrförmigen Element innerhalb einer Öffnung des ersten Rohres,
**gekennzeichnet durch** die Verfahrensschritte:
a) Einbringen des rohrförmigen Elementes in die Öffnung des ersten Rohres in einem Umfang, dass ein Endabschnitt des rohrförmigen Elementes sich innerhalb des ersten Rohres erstreckt,
b) Einbringen eines ersten, einen radial abragenden Vorsprung aufweisenden Abschnitt eines Werkzeuges **durch** das rohrförmige Element in das Innere des Rohres in einem Umfang, dass der radial abragende Abschnitt zwischen äußerem freien Rand des rohrförmigen Elementes und gegenüber der Öffnung verlaufenden Innenwandung des ersten Rohres verläuft,
c) axiales Verschieben eines zweiten Abschnitts des Werkzeuges entlang des ersten Abschnitts zum Positionieren des zweiten Abschnitts innerhalb des rohrförmigen Elementes im Bereich der Öffnung des Rohres, wobei der erste und zweite Abschnitt im Bereich der Öffnung einen wirksamen Querschnitt aufweisen, der an das rohrförmige Element in Bezug auf dessen Querschnitt im Bereich der Öffnung angepasst ist,
d) Zurückziehen des ersten Abschnitts entlang des zweiten Abschnitts in Richtung der Öffnung des Rohres bei gleichzeitigem bereichsweisen Umbiegen des innerhalb des ersten Rohres verlaufenden Randabschnitts des rohrförmigen Elementes,
e) Verschieben des ersten Abschnitts in Richtung der der Öffnung gegenüberliegenden Innenwandung der Öffnung und Drehen des ersten und zweiten Abschnitts zur Ausrichtung des radial abragenden Vorsprungs des ersten Abschnitts auf einen weiteren umzubiegenden Bereich des innerhalb des ersten Rohres verlaufenden Randabschnitts des rohrförmigen Elementes und Wiederholung des zuvor beschriebenen Verfahrensschrittes d),
f) Herausziehen zunächst des zweiten Abschnitts und sodann des ersten Abschnitts nach kraftschlüssiger Verbindung des rohrförmigen Elementes mit dem Rohr.

## Claims

1. Device (34) for connecting a first tube (10) with a tubular element (14) such as a connecting tube or a segment thereof, with the tubular element penetrating with its end segment (22. 24) an opening (12) of the first tube and being connected to it non-positive by means of the device,
**characterized in,**
**that** the device (34) comprises at least two segments (36, 38), axially displaceable one relative to the other and extending within the tubular element (14) up to or nearly into the first tube (10), that one of the segments (36) comprises a radially projecting protrusion (42) which engages behind the end segments (22, 24) with the segments disposed within the tube (10), with the segment comprising outside of the projecting protrusion a total effective cross section which is adapted to the inner cross section of the tubular element (14) in the region of the opening (12) of the first tube (10).

2. Device as claimed in claim 1,
**characterized in,**
**that** the segment (36) comprising the projecting protrusion (42) is axially displaceable to at least one further segment (38) such that the end segment (22, 24), extending within the first tube (10), of the tubular element (14) is bendable in the direction of the inner wall of the first tube.

3. Device as claimed in claim 1 or 2,
**characterized in,**
**that** the tool (34) comprises two segments (36, 38) axially displaceable within the opening (12) of the first tube (10), one relative to the other and disposable in the opening, that the segment (36) comprising the projecting protrusion (42) comprises a cylindrical basic body segment (44) and the second segment has a sickle-shape in cross section whose concave surface in the contact region with the first segment is adapted to its outer geometry.

4. Device as claimed in at least one of the preceding claims.
**characterized in.**
**that** the projecting protrusion (42) has a cylinder shape with an underside (46) extending obliquely in the direction of the basic body segment (44) of the first segment (36).

5. Device as claimed in at least one of the preceding claims,
**characterized in,**
**that** the underside (46) of the radially projecting protrusion (42) of the first segment (36) conforms in segments to an outer surface of a truncated cone.

6. Device as claimed in at least one of the preceding claims,
**characterized in,**
**that** the radially projecting protrusion (42) changes on the outer wall side flush into the basic body segment (44) in the contact region with the second segment (38).

7. Device as claimed in at least one of the preceding claims,
**characterized in,**
**that** the tool (34) is rotatable about its longitudinal axis.

8. Device as claimed in at least one of the preceding claims,
**characterized in,**
**that** the first segment (36) is a shaft with projecting cam as the radially projecting protrusion (42) and that the first segment penetrates a cylindrical reception (40) from which extends the second segment (38).

9. Device as claimed in at least one of the preceding claims,
**characterized in,**
**that** the reception (40) and the second segment (38) form a unit.

10. Method for connecting a first tube with a tubular element within an opening of the first tube,
**characterized by** the method steps:
a) introducing the tubular element into the opening of the first tube to an extent that an end segment of the tubular element extends within the first tube,
b) introducing a first segment, comprising a radially projecting protrusion, of a tool through the tubular element into the interior of the tube to an extent that the radially projecting segment extends between the outer free margin of the tubular element and the inner wall, extending opposite the opening, of the first tube,
c) axially displacing of a second segment of the tool along the first segment for positioning the second segment within the tubular element in the region of the opening of the tube with the first and the second segment having in the region of the opening an effective cross section which is adapted to the tubular element with respect to its cross section in the region of the opening,
d) pulling back of the first segment along the second segment in the direction of the opening of the tube with the simultaneous regional bending of the margin segment, extending within the first tube, of the tubular element,
e) displacing of the first segment in the direction of the inner wall, opposing the opening, of the opening and rotating the first and second segment for orienting the radially projecting protrusion of the first segment onto a further region to be bent of the margin segment extending within the first tube, of the tubular element and repeating the previously described method step d),
f) pulling out, first, the second segment and, subsequently, the first segment after the non-positive connection of the tubular element with the tube.

## Revendications

1. Dispositif (34) pour relier un premier tube (10) à un élément tubulaire (14) tel que tube de raccordement ou partie d'un tel tube, l'élément tubulaire ayant un de ses tronçons terminaux (22, 24) qui traverse un orifice (12) du premier tube et se trouve fixé d'une façon rigide sur lui au moyen du dispositif,
**caractérisé en ce que**
le dispositif (34) comprend au moins deux tronçons (36, 38) passant à l'intérieur de l'élément tubulaire (14), pouvant se déplacer, l'un par rapport à l'autre jusque, ou presque jusque dans le premier tube (10), l'un des tronçons (36) comporte une saillie (42) en direction radiale qui, lorsque les tronçons sont montés dans le tube (10), s'accroche derrière l'extrémité (22, 24), les tronçons situés à l'extérieur de la saillie présentant une section globale effective, adaptée à la section intérieure de l'élément tubulaire (14) dans la zone de l'orifice (12) du premier tube (10).

2. Dispositif selon la revendication 1,
**caractérisé en ce que**
le tronçon (36) présentant la saillie (42) est mobile axialement vers au moins un autre tronçon (38) de sorte que le tronçon terminal (22, 24) de l'élément tubulaire (14) s'étendant à l'intérieur du premier tube (10) peut se cintrer en direction de la paroi intérieure du premier tube.

3. Dispositif selon la revendication 1 ou 2,
**caractérisé en ce que**
l'outil (34) comprend deux tronçons (36, 38) coaxiaux, mobiles l'un par rapport à l'autre à l'intérieur de l'ouverture (12) du premier tube (10) et pouvant être placés dans la position voulue dans cet orifice (12), le premier tronçon (36) comportant la saillie (42) présente un tronçon de base (44) de forme cylindrique et le deuxième tronçon présente une section en forme de croissant dont la face concave est adaptée dans la zone de contact avec la géométrie externe du premier tronçon.

4. Dispositif selon au moins l'une quelconque des revendications précédentes,
**caractérisé en ce que**
la saillie (42) présente une forme cylindrique avec une face inférieure (46) inclinée en direction du tronçon de base (44) du premier tronçon (36).

5. Dispositif selon au moins l'une quelconque des revendications précédentes,
**caractérisé en ce que**
la face inférieure (46) de la saillie (42) du premier tronçon (36) est une surface extérieure partielle d'un tronc de cône.

6. Dispositif selon au moins l'une quelconque des revendications précédentes,
**caractérisé en ce que**
la saillie (42) a sa surface externe qui prolonge à fleur le tronçon de base (44) dans la zone de contact avec le premier tronçon (38).

7. Dispositif selon au moins l'une quelconque des revendications précédentes,
**caractérisé en ce que**
l'outil (34) peut tourner autour de son axe longitudinal.

8. Dispositif selon au moins l'une quelconque des revendications précédentes,
**caractérisé en ce que**
le premier tronçon (36) est un arbre présentant comme saillie radiale (42) une came en excroissance, et le premier tronçon traverse un logement cylindrique (40) d'où sort le deuxième tronçon (38).

9. Dispositif selon au moins l'une quelconque des revendications précédentes,
**caractérisé en ce que**
le logement (40) et le deuxième tronçon (38) forment une unité.

10. Procédé pour relier un premier tube à un élément tubulaire à l'intérieur d'un orifice du premier tube,
**caractérisé par** les étapes suivantes :
a) Introduction de l'élément tubulaire dans l'orifice du premier tube, d'une façon telle qu'une extrémité de l'élément tubulaire ait pénétré à l'intérieur du premier tube,
b) Introduction d'un premier tronçon d'un outil présentant une saillie radiale, à travers l'élément tubulaire à l'intérieur du tube, sur une distance telle que la saillie radiale se déplace entre le bord extérieur libre de l'élément tubulaire et en regard de la paroi intérieure se trouvant devant l'orifice du premier tube,
c) Translation axiale d'un deuxième tronçon de l'outil le long du premier tronçon pour le positionnement du deuxième tronçon à l'intérieur de l'élément tubulaire au niveau de l'orifice du tube, le premier et le deuxième tronçon présentant au niveau de l'orifice, une section effective adaptée à la section de l'élément tubulaire au niveau de l'orifice du premier tube,
d) Retrait du premier tronçon le long du deuxième tronçon en direction de l'orifice du tube tout en cintrant, par zones, à l'intérieur du premier tube, l'extrémité de l'élément tubulaire,
e) Déplacement du premier tronçon en direction de la paroi intérieure opposée à l'orifice et rotation du premier et du deuxième tronçon pour adapter la saillie radiale du premier tronçon à une nouvelle zone à recourber de l'extrémité de l'élément tubulaire, à l'intérieur du premier tube, puis répétition de l'étape antérieure d) du procédé,
f) Extraction d'abord du deuxième tronçon puis du premier tronçon après s'être assuré de la fixation convenable de l'élément tubulaire sur le tube.
